# EUROPÄISCHE PATENTSCHRIFT

(11) **EP 3 793 874 B1**
(45) Veröffentlichungstag und Bekanntmachung des Hinweises auf die Patenterteilung: **15.12.2021**
(21) Anmeldenummer: 19725660.5
(22) Anmeldetag: 13.05.2019
(51) Int. Cl.: B60T 15/60, B60T 15/04

(54) **VENTILBAUGRUPPE ALS PARK-LÖSE-VENTIL FÜR EIN ANHÄNGEFAHRZEUG**
VALVE ASSEMBLY AS PARKING RELEASE VALVE FOR TRAILER
SOUPAPE DEDESSERAGE DE FREIN DE PARKING POUR REMORQUE

(30) Priorität: 17.05.2018 DE 102018111894
(43) Veröffentlichungstag der Anmeldung: 24.03.2021
(73) Patentinhaber: ZF CV Systems Hannover GmbH, 30453 Hannover (DE)
(72) Erfinder: STENDER, Axel, 31787 Hameln (DE); WITTE, Norbert, 31867 Lauenau (DE); BARLSEN, Holger, 30851 Langenhagen (DE); WINKEL, Marcel, 30449 Hannover (DE)
(74) Vertreter: Ohlendorf, Henrike
(86) Internationale Anmeldenummer: PCT/EP2019/062132
(87) Internationale Veröffentlichungsnummer: WO 2019/219561

(56) Entgegenhaltungen:
- EP-A1- 1 386 810
- EP-A1- 2 426 021
- EP-A2- 0 366 445
- EP-A2- 1 132 275
- EP-A2- 2 567 874
- WO-A1-00/30912
- CN-B- 104 627 157
- CN-U- 207 000 446
- DE-A1- 2 250 621
- FR-A1- 2 379 855
- US-A1- 2016 378 130

## Beschreibung

Die Erfindung betrifft eine Ventilbaugruppe als Park-Löse-Ventil für ein Anhängefahrzeug mit Federspeicherbremse, mit einer in einem Gehäuse axial bewegbaren Steuerstange, welche an einem Ende außerhalb des Gehäuses mit einem Betätigungsknopf versehen ist. Außerdem betrifft die Erfindung eine pneumatische Bremsanlage und ein Anhängefahrzeug. Ein zu dem stand der Technik gehörendes Beispiel ist im Dokument EP 1 386 810 A1 offenbart.

Die pneumatische Bremsanlage eines Anhängefahrzeugs wird typischerweise über zwei pneumatische Leitungen mit einem Zugfahrzeug verbunden. Eine Leitung führt Steuerdruck über einen Steueranschluss zum Anhängefahrzeug. Dieser Anschluss wird auch als "Bremse" bezeichnet. Die andere Leitung führt Vorratsdruck über einen als "Vorrat" bezeichneten Versorgungsanschluss zum Anhängefahrzeug.

In die Bremsanlage integriert ist eine Sicherheitsfunktion bei Abriss der Leitung für den Vorratsdruck. Hierzu wird der Druck in der Leitung überwacht. Bei zu großem Druckabfall wird das Anhängefahrzeug automatisch durch Federspeicherbremsen eingebremst.

Das Anhängefahrzeug weist einen Vorratsbehälter für Druckluft auf, der über den Versorgungsanschluss gespeist wird. Durch den Vorratsbehälter kann das Anhängefahrzeug über seine Betriebsbremsen mehrfach kurz hintereinander gebremst werden, ohne dass die hierfür erforderliche Druckluft zeitgleich über den Versorgungsanschluss zugeführt werden muss.

Moderne pneumatische Bremsanlagen weisen kombinierte Bremszylinder auf, nämlich mit Membran-Betriebsbremszylinder und Federspeicher-Bremszylinder in einer gemeinsamen Baugruppe. Dies hat den Vorteil, dass Bremskolben, Bremshebel und Bremsscheiben oder Bremstrommeln nur einmal je Baugruppe vorhanden sein müssen. Lediglich Federspeicher-Bremszylinder und Betriebsbremszylinder sind nebeneinander je Baugruppe vorhanden. Derartige kombinierte Bremszylinder werden auch als Tristop-Zylinder bezeichnet. Möglich ist aber auch eine getrennte Anordnung von Betriebsbremsen und Federspeicherbremsen.

In einem abgestellten und vom Zugfahrzeug getrennten Anhängefahrzeug sind die Federspeicherbremsen aktiviert, da die Federspeicherbremszylinder entlüftet sind. Zum Rangieren des Anhängefahrzeugs ist ein Lösen der Federspeicherbremsen erforderlich. Hierfür ist eine spezielle Ventilbaugruppe als Park-Löse-Ventil vorgesehen, welche in einer Lösestellung die Federspeicher-Bremszylinder mit Druckluft aus dem Vorratsbehälter (des Anhängefahrzeugs) belüftet und so die Federspeicherbremsen löst.

Nach Beendigung des Rangierens müssen die Federspeicher-Bremszylinder wieder entlüftet werden. Hierzu kann das Park-Löse-Ventil eine Parkstellung einnehmen.

In der Praxis kann das Park-Löse-Ventil aus zwei getrennt voneinander bedienbaren Ventileinheiten bestehen. Kompakter ist ein Ventil, in dem die beschriebenen Funktionalitäten soweit wie möglich zusammengefasst sind.

Ein Kombiventil mit Steuerstange und Betätigungsknopf ist aus der EP 1 386 810 B1 bekannt. Die Steuerstange ist zwischen den drei Stellungen Fahren, Parken und Rangieren axial verschiebbar und durch eine Schiebehülse verriegelbar.

Ein Kombiventil mit Steuerstange und Betätigungsknopf zeigt auch die DE 198 18 982 C2.

Sinnvoll ist eine einfache Erkennbarkeit der Position der Steuerstange bzw. der an der Ventilbaugruppe jeweils eingestellten Funktion. Für getrennt voneinander bedienbare Ventileinheiten zur Realisierung der Funktionen eines Park-Löse-Ventils muss die DIN 74255 beachtet werden. In Rangierstellung (Lösestellung) soll eine schwarze Markierung dominant sein, in Parkstellung eine rote Markierung.

Aufgabe der vorliegenden Erfindung ist die Schaffung einer Ventilbaugruppe mit Park-Löse-Ventil in kompakter Bauart und mit der Möglichkeit zur Darstellung des Schaltzustands zumindest ähnlich der in der DIN 74255 geforderten Symbolik.

Zur Lösung der Aufgabe weist die erfindungsgemäße Ventilbaugruppe die Merkmale des Anspruchs 1 auf. Insbesondere ist ein zum Betätigungsknopf benachbarter Anzeigeknopf vorgesehen, welcher
- in einer Parkstellung der Steuerstange weniger aus dem Gehäuse hervorragt als der Betätigungsknopf und
- in einer Lösestellung (Rangierstellung) weiter aus dem Gehäuse hervorragt als der Betätigungsknopf.

Vorzugsweise sind Betätigungsknopf und Anzeigeknopf unmittelbar benachbart zueinander angeordnet, so dass besonders einfach erkennbar ist, ob nun der Betätigungsknopf weiter aus dem Gehäuse hervorragt als der Anzeigeknopf oder umgekehrt. Dadurch ist die Voraussetzung für eine Funktionalität oder Symbolik gemäß DIN 74255 geschaffen.

Nach einem weiteren Gedanken der Erfindung ist vorgesehen, dass Anzeigeknopf und Betätigungsknopf in einer Fahrstellung der Steuerstange gleichweit aus dem Gehäuse hervorragen. Anzeigeknopf und Betätigungsknopf bzw. deren Oberflächen schließen in Fahrstellung insbesondere bündig miteinander ab oder gehen ineinander über. Dadurch werden Missverständnisse in Bezug auf das Vorhandensein von Parkstellung oder Lösestellung vermieden.

Nach einem weiteren Gedanken der Erfindung ist der Anzeigeknopf relativ zum Gehäuse unbeweglich gehalten, zumindest in Axialrichtung der Steuerstange. Beweglich (in Axialrichtung) ist nur die Steuerstange mit dem Betätigungsknopf. Dies vereinfacht die erforderliche Mechanik erheblich. Das Park-Löse-Ventil ist dann ein Einknopfventil, derart, dass nur ein Knopf zur Betätigung des Ventils zu bewegen ist.

Nach einem weiteren Gedanken der Erfindung umfasst der Betätigungsknopf den Anzeigeknopf außen, so dass der Anzeigeknopf in Parkstellung der Steuerstange in den Betätigungsknopf eingetaucht ist und in Lösestellung aus dem Betätigungsknopf herausschaut. Dadurch ergeben sich für die Parkstellung einerseits und die Lösestellung andererseits ganz verschiedene Ansichten, die einfach unterscheidbar sind. Ein unbeabsichtigtes Betätigen in Richtung auf die Lösestellung wird erschwert. Eine Betätigung mit der flachen Hand aus der Fahrstellung in die Lösestellung ist dadurch unmöglich. Der feststehende Anzeigeknopf wirkt hier als Verriegelung gegen eine unbeabsichtigte Bewegung des Betätigungsknopfes. Vorzugsweise ist der Betätigungsknopf koaxial zum Anzeigeknopf gehalten.

Nach einem weiteren Gedanken der Erfindung ist der Betätigungsknopf mit einer anderen Farbe versehen als der Anzeigeknopf. Dadurch sind Parkstellung und Lösestellung noch einfacher zu unterscheiden. Insbesondere unter Berücksichtigung der DIN 74255 weist der Anzeigeknopf eine schwarze Oberfläche auf und der Betätigungsknopf eine rote Oberfläche.

Nach einem weiteren Gedanken der Erfindung ist eine Verriegelung vorgesehen, derart, dass eine Bewegung des Betätigungsknopfes aus der Fahrstellung in die Lösestellung nur nach Lösen der Verriegelung möglich ist. Für die Bewegung des Betätigungsknopfes in die Parkstellung und/oder Fahrstellung ist vorzugsweise keine Verriegelung vorgesehen.

Nach einem weiteren Gedanken der Erfindung ist der Anzeigeknopf im Gehäuse bewegbar gehalten und zugleich Entriegelungsknopf, so dass ein Übergang der Steuerstange von einer Fahrstellung in die Lösestellung nur möglich ist nach einer Bewegung des Anzeigeknopfes in eine Entriegelungsposition. Der Anzeigeknopf ist demnach bewegbar zwischen einer Verriegelungsposition und der Entriegelungsposition. Der Zugang zur Lösestellung ist dadurch besonders gesichert.

Nach einem weiteren Gedanken der Erfindung ist der Anzeigeknopf achsparallel zur Steuerstange bewegbar, insbesondere koaxial. Dadurch ist eine Einhandbedienung möglich.

Nach einem weiteren Gedanken der Erfindung ist der Übergang der Steuerstange von der Fahrstellung in die Lösestellung nur möglich nach Eindrücken des Anzeigeknopfes in Richtung auf das Gehäuse. Zur Unterstützung kann als Widerstand gegen das Eindrücken eine am Gehäuse abgestützte Druckfeder vorgesehen sein, die der Bewegung des Anzeigeknopfes entgegenwirkt. Vorzugsweise befindet sich der Anzeigeknopf in seiner Entriegelungsposition dichter am Gehäuse als der Betätigungsknopf. Insbesondere ist der Anzeigeknopf in seiner Entriegelungsposition in den Betätigungsknopf eingetaucht. Dadurch wird eine unbeabsichtigte Entriegelung durch Drücken des Betätigungsknopfes oder Anlehnen an denselben vermieden.

Nach einem weiteren Gedanken der Erfindung verhindert in Fahrstellung der Steuerstange ein Sperrkörper eine Bewegung in die Lösestellung. Außerdem wird in Fahrstellung der Sperrkörper durch ein mit dem Anzeigeknopf verbundenes Verriegelungsorgan in einer Sperrposition gehalten. Dadurch wird auf einfache Weise eine Fehlbedienung der Steuerstange verhindert.

Nach einem weiteren Gedanken der Erfindung ist vorgesehen, dass der Sperrkörper quer zur Axialrichtung der Steuerstange bewegbar ist zwischen der Sperrposition und einer Entsperrposition, und dass die Entsperrposition nur einnehmbar ist, wenn sich der Anzeigeknopf in der Entriegelungsposition befindet.

Nach einem weiteren Gedanken der Erfindung ist vorgesehen, dass das Verriegelungsorgan mit einem Absatz versehen ist, welcher in Verriegelungsposition den Sperrkörper radial beaufschlagt und eine Bewegung des Sperrkörpers in die Entsperrposition verhindert. In der Entriegelungsposition des Anzeigeknopfes wird der Sperrkörper durch das Verriegelungsorgan nicht beaufschlagt.

Nach einem weiteren Gedanken der Erfindung ist ein mit dem Betätigungsknopf verbundener Betätigungskörper mit einem Absatz versehen, wobei dieser Absatz nur in Entsperrposition des Sperrkörpers am Sperrkörper vorbeibewegbar ist. In Sperrposition blockiert der Sperrkörper den Absatz des Betätigungskörpers. Erfindungsgemäß ist vorgesehen, dass in Fahrstellung ein Anschluss für Vorratsdruck mit einem Anschluss für einen Steuerdruck verbunden ist. Der Steuerdruck wird einem Modulator oder einer zugeordneten Ventilanordnung zugeführt. Der Modulator als elektro-pneumatisches Bauelement steuert üblicherweise über eine pneumatische Einheit die Zufuhr von Druckluft zu den Betriebsbremsen oder Federspeicherbremsen.

Erfindungsgemäß ist in Parkstellung ein Anschluss für einen Steuerdruck mit einem Anschluss für eine Entlüftung verbunden. Entsprechend werden in Parkstellung die Federspeicherbremszylinder mittelbar über den Steuerdruck entlüftet.

Erfindungsgemäß ist in Lösestellung ein Anschluss für Vorratsbehälterdruck mit einem Anschluss für einen Steuerdruck verbunden. Entsprechend werden in Lösestellung die Federspeicherbremszylinder mittelbar durch den Steuerdruck belüftet.

Gegenstand der Erfindung ist auch eine pneumatische Bremsanlage für ein Anhängefahrzeug mit einer Ventilbaugruppe wie voranstehend beschrieben.

Schließlich ist Gegenstand der Erfindung auch ein Anhängefahrzeug mit der pneumatischen Bremsanlage.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:
- Fig. 1: einen Längsschnitt durch eine stark vereinfachte Darstellung einer ersten Ausführungsform eines Park-Löse-Ventils, ohne Verriegelung und in Fahrstellung,
- Fig. 2: das Park-Löse-Ventil gemäß Fig. 1 in Lösestellung,
- Fig. 3: das Park-Löse-Ventil gemäß Fig. 1 in Parkstellung,
- Fig. 4: eine detailliertere Darstellung des Park-Löse-Ventils der Fig. 1 bis 3, in Parkstellung,
- Fig. 5: das Park-Löse-Ventil gemäß Fig. 4 in Fahrstellung,
- Fig. 6: das Park-Löse-Ventil gemäß Fig. 4 in Lösestellung,
- Fig. 7: eine etwas vergrößerte Ansicht der Fig. 5, nämlich das Park-Löse-Ventil gemäß Fig. 4, jedoch in Fahrstellung,
- Fig. 8: eine perspektivische Darstellung einer Außenansicht des Park-Löse-Ventils der Fig. 1 bis 7,
- Fig. 9 bis 13: eine stark vereinfachte Darstellung einer zweiten Ausführungsform des Park-Löse-Ventils, mit Verriegelung und zur Wiedergabe eines Übergangs zwischen Fahrstellung und Lösestellung, nämlich

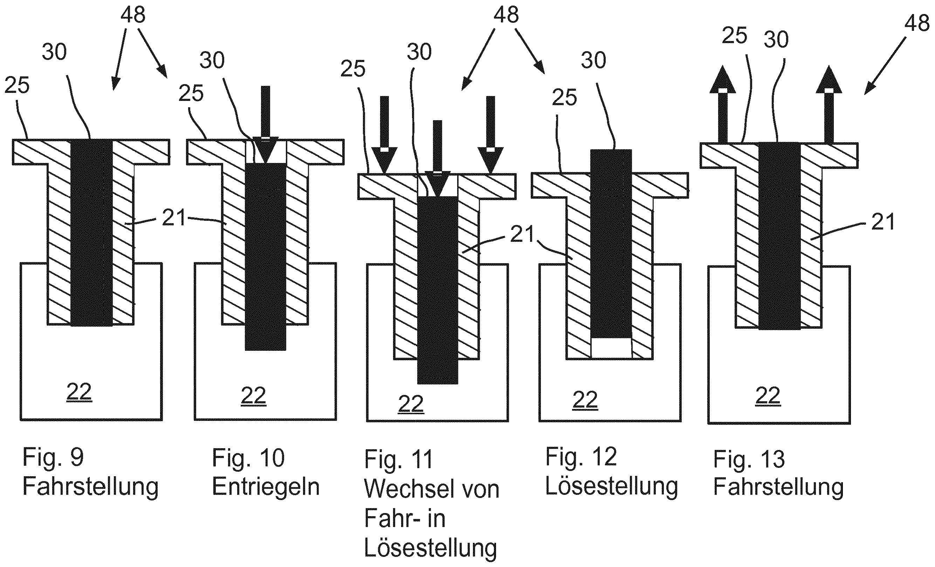

- Fig. 9: Fahrstellung,
- Fig. 10: Entriegeln,
- Fig. 11: Wechsel von Fahr- in Lösestellung,
- Fig. 12: Lösestellung,
- Fig. 13: Fahrstellung,

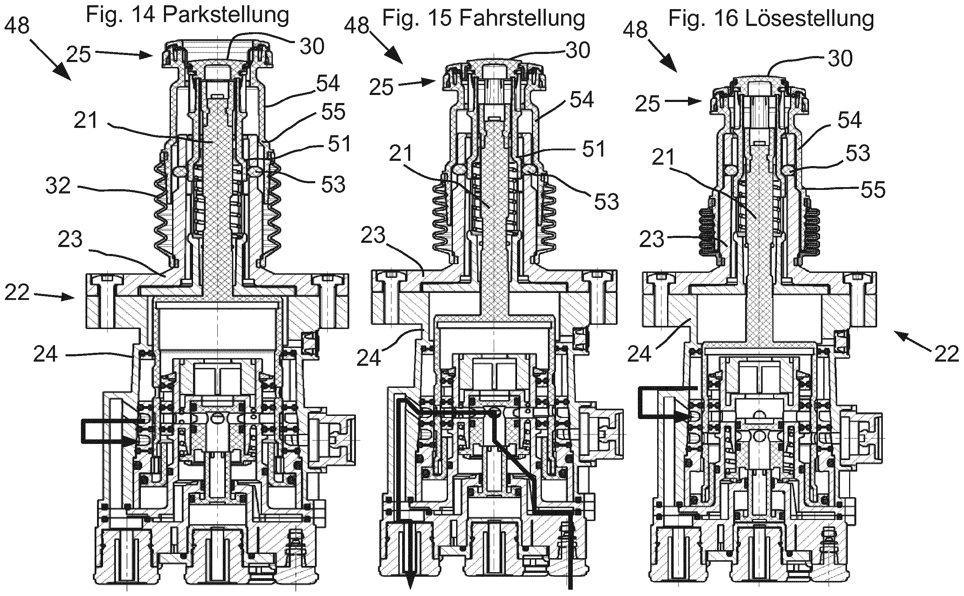

- Fig. 14: das Park-Löse-Ventil der zweiten Ausführungsform gemäß den Fig. 9 bis 13, jedoch in etwas detaillierterer Darstellung, in Parkstellung,
- Fig. 15: das Park-Löse-Ventil gemäß Fig. 14, jedoch in Fahrstellung,
- Fig. 16: das Park-Löse-Ventil gemäß Fig. 14, jedoch in Lösestellung,

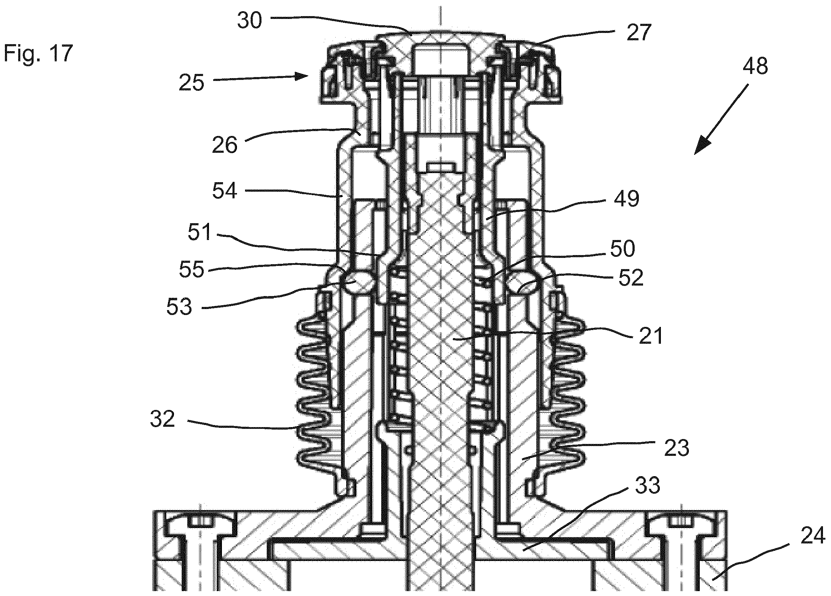

- Fig. 17: eine vergrößerte Darstellung des oberen Teils des Park-Löse-Ventils gemäß Fig. 15 in Fahrstellung.

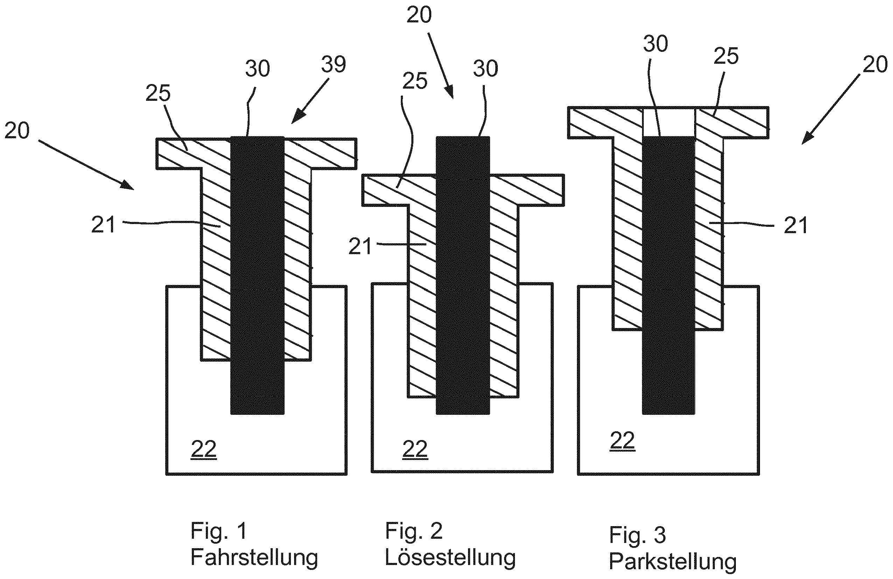

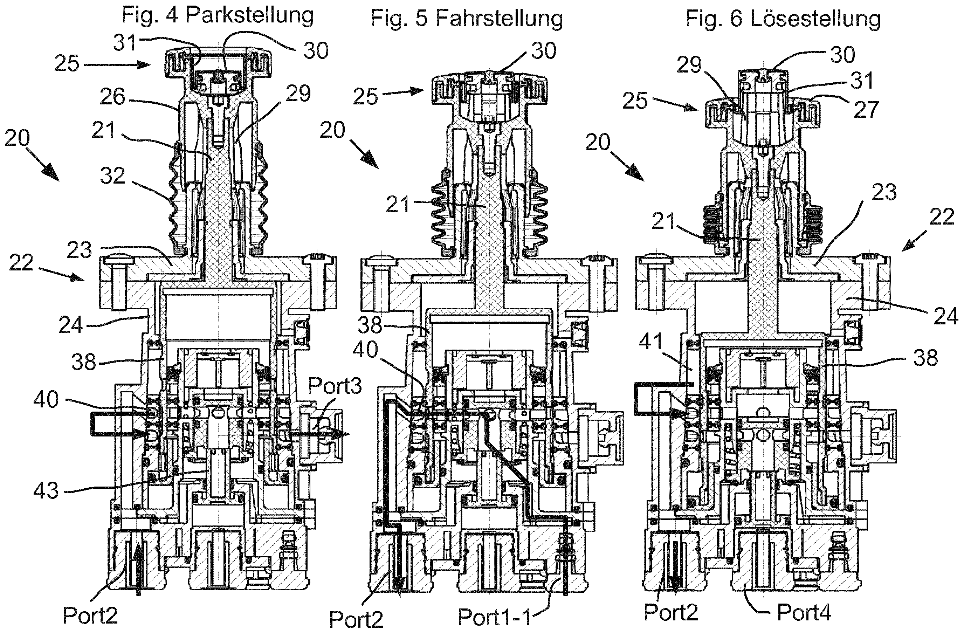

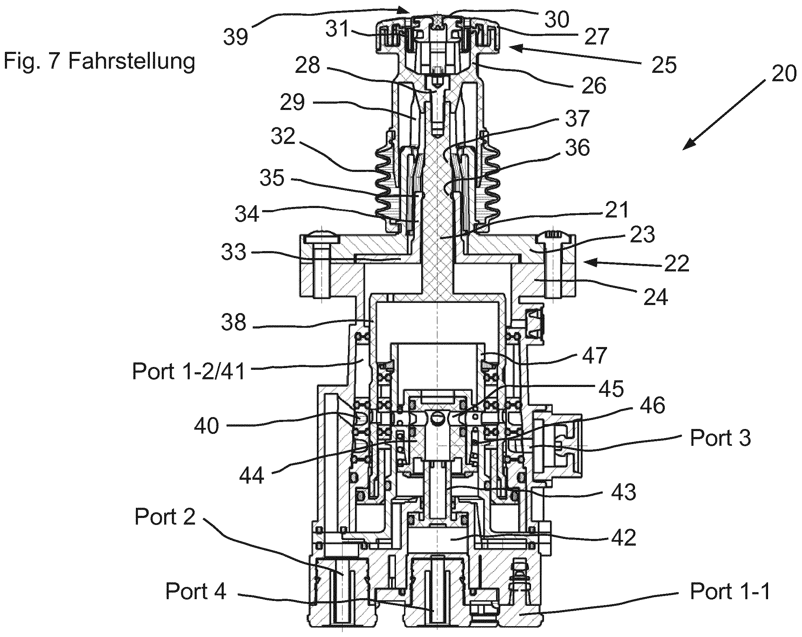

Es wird zunächst Bezug genommen auf die Fig. 1 bis 8. Diese betreffen ein erstes Ausführungsbeispiel eines Park-Löse-Ventils 20 für ein nicht gezeigtes Anhängefahrzeug mit Federspeicherbremse. Das Ventil 20 ist verstellbar zwischen Fahrstellung (Fig. 1, 5, 7), Parkstellung (Fig. 3, 4) und Lösestellung (Fig. 2, 6). Die Lösestellung wird auch als Rangierstellung oder Shunt-Funktion bezeichnet. In dieser Stellung werden die Federspeicherbremsen des vom Zugfahrzeug abgekoppelten Anhängefahrzeugs belüftet, um ein Rangieren zu ermöglichen.

Zur besseren Unterscheidung sind in den Figuren axial bewegbare Teile kreuzschraffiert dargestellt, während unbewegliche Teile mit einfachen Schraffuren versehen sind (sofern im Schnitt dargestellt). Die zur räumlichen Orientierung verwendeten Ausdrücke, wie "oben", "unten", "rechts", "links", beziehen sich nur auf die Ausrichtung in den Zeichnungen und sollen nicht als generelle Einschränkung verstanden werden.

Im ersten Ausführungsbeispiel der Fig. 1 bis 8 erfolgt die manuelle Verstellung des Ventils 20 ausschließlich durch axiale Bewegung einer Steuerstange 21. Eine Verriegelung ist in dieser Ausführungsform vorzugsweise nicht vorgesehen, kann aber vorhanden sein.

Die Steuerstange 21 ist in einem Gehäuse 22 axial verschiebbar gelagert. Das Gehäuse 22 ist zweiteilig aufgebaut mit einem oberen Teil 23 und einem unteren Teil 24 und weist am unteren Teil 24 Ein- und Ausgänge auf, nämlich
Port 1-1 (Vorratsdruck)
Port 1-2 (Vorratsbehälterdruck)
Port 2 (Steuerdruck/Modulator)
Port 3 (Entlüftung)
Port 4 (Steuereingang).

Die Steuerstange 21 ist an ihrem oberen Ende mit einem Betätigungsknopf 25 versehen, welcher hier einen Grundkörper 26 und eine sichtbare rote Kappe 27 aufweist. Der Betätigungsknopf 25 befindet sich außerhalb des Gehäuses 22, noch oberhalb des oberen Teils 23, und ist über einen Bolzen 28 mit der Steuerstange 21 fest aber lösbar verbunden.

Oben auf dem Gehäuse 22, nämlich auf dem oberen Teil 23, und oberhalb der Steuerstange 21 sitzt auf Halteklammern 29 ein schwarzer Anzeigeknopf 30, weleher in dieser ersten Ausführungsform unbeweglich ist. Der Betätigungsknopf 25 umfasst den Anzeigeknopf 30 ringförmig und ist relativ zu diesem bewegbar. Hierzu weisen Betätigungsknopf 25, Grundkörper 26 und Anzeigeknopf 30 nicht näher gezeigte Ausnehmungen und Durchbrüche auf.

Zur Abdichtung gegen äußere Einflüsse sind Anzeigeknopf 30 und Betätigungsknopf 25 durch einen Dichtbalg 31 miteinander verbunden.

Da der Betätigungsknopf 25 mit dem Grundkörper 26 teilweise über den oberen Teil 23 reicht bzw. gestülpt ist, ist in diesem äußeren Übergangsbereich ein Faltenbalg 32 zur Abdichtung vorgesehen.

Die Steuerstange 21 ist im oberen Teil 23 zur Durchführung der axialen Bewegung in einem von unten in den oberen Teil 23 eingesetzten Kragen 33 geführt. Der Kragen 33 weist innen nach oben reichende Rastschenkel 34 auf, deren Enden 35 in korrespondierende Einschnürungen 36, 37 der Steuerstange 21 einrasten können und so für den Bediener zwei definierte, unterschiedliche Stellungen anzeigen oder fühlbar machen. Eine Verriegelung ist hier nicht vorgesehen aber möglich.

An die Steuerstange 21 schließt nach unten ein topfförmiger Fortsatz 38 an, welcher ausschließlich im unteren Teil 24 des Gehäuses 22 geführt ist, während die Steuerstange 21 überwiegend im oberen Teil 23 geführt ist und teilweise in den unteren Teil 24 hineinragt.

Anzeigeknopf 30 und Betätigungsknopf 25 sind in ihrer axialen Höhe gegenüber dem Gehäuse 22 derart aufeinander abgestimmt, dass in Fahrstellung gemäß Fig. 1, 5, 7 eine bündige oder nahezu bündige Oberfläche 39 sichtbar ist, in Parkstellung gemäß Fig. 3, 4 der Anzeigeknopf 30 im Betätigungsknopf 25 eingetaucht ist und in Lösestellung der Fig. 2, 6 der Anzeigeknopf 30 deutlich sichtbar über den Betätigungsknopf 25 hervorsteht. Durch die beschriebene Relativstellung und die Farbgebung von Anzeigeknopf 30 (schwarz) und Betätigungsknopf 25 (rot) ergibt sich eine einfache und fehlerfreie Bedienbarkeit des Ventils 20.

Über den Port 1-1 ist das Ventil 20 an eine Vorratsdruck führende, nicht gezeigte Leitung angeschlossen.

Port 1-2 ist an eine Vorratsbehälterdruck führende, nicht gezeigte Leitung angeschlossen. Ein Vorratsbehälter ist üblicherweise Teil der Bremsanlage im Anhänger.

Port 2 ist der Anschluss für einen Steuerdruck. Letzterer wird einem sogenannten Modulator - auch als Bremsmodulator oder Anhängermodulator bezeichnet - direkt oder mittelbar zugeführt, etwa über ein pneumatisches Erweiterungsmodul, welches das Anschließen und Verbinden von Leitungen vereinfacht und pneumatische Zusatzfunktionen beinhalten kann. Über den nicht gezeigten Modulator bzw. mit dem Steuerdruck wird in bekannter Weise eine Belüftung (Fahrstellung, Lösestellung) oder Entlüftung (Parkstellung) der Federspeicherbremsen gesteuert.

Port 3 ermöglicht eine Entlüftung eines an Port 2 anliegenden Drucks.

Port 4 ist als Steuereingang vorgesehen. Durch einen hier anliegenden Druck kann die Funktion des Ventils 20 zusätzlich beeinflusst werden.

Die Verbindung der verschiedenen Ports 1-1, 1-2, 2, 3 erfolgt grundsätzlich nur durch Bewegung der Steuerstange 21 mit dem topfförmigen Fortsatz 38. Hierzu sind im unteren Teil 24 des Gehäuses 22 nicht im Detail gezeigte Ringkanäle und Überströmkanäle vorgesehen, die je nach Stand des topfförmigen Fortsatzes 38 miteinander verbunden oder voreinander verschlossen sind.

In Parkstellung gemäß Fig. 3, 4 ist ein einerseits mit dem Port 2 verbundener Ringkanal 40 andererseits auch mit dem Port 3 verbunden, so dass Federspeicherbremsen über den Modulator, Port 2 und Port 3 entlüftet werden können. Hierzu ist der Betätigungsknopf 25 mit der Steuerstange 21 hochgezogen und steht deutlich über dem Anzeigeknopf 30. Der topfförmige Fortsatz 38 befindet sich in einer oberen Position.

In der Fahrstellung der Fig. 1, 5 schließen der Betätigungsknopf 25 und der Anzeigeknopf 30 bündig miteinander ab (Fig. 1) oder bilden eine gemeinsame, leicht konvex gekrümmte Oberfläche (Fig. 5). Der Betätigungsknopf 25 befindet sich entsprechend auf derselben Höhe wie der Anzeigeknopf 30. Gegenüber der Parkstellung ist die Steuerstange 21 mit dem topfförmigen Fortsatz 38 abwärtsbewegt in eine mittlere Position. Dadurch ist der Ringkanal 40 einerseits mit Port 2 und andererseits mit dem Port 1-1 verbunden.

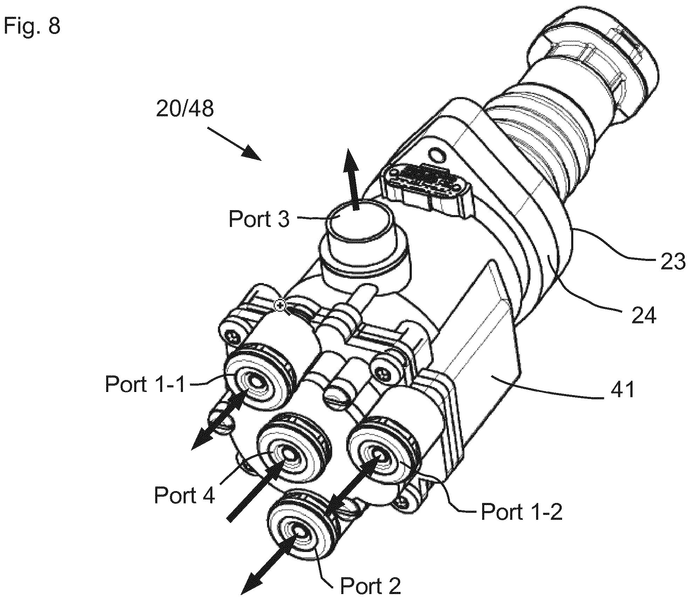

In Lösestellung gemäß Fig. 2, 6 ist der Betätigungsknopf 25 soweit abwärtsbewegt, dass der Anzeigeknopf 30 deutlich nach oben vorsteht. Steuerstange 21 und topfförmiger Fortsatz 38 befinden sich in einer unteren Position. Der Ringkanal 40 ist dadurch (mit einem Überströmkanal 41) verbunden, welcher mit Port 1-2 in Verbindung steht. Letzterer ist nur in Fig. 8 dargestellt.

Mit Bezug zu Port 4 weist das Park-Löse-Ventil 20 eine Sicherheitsfunktion auf. Gespeist wird Port 4 aus dem Bremsdruck einer mit dem Anhängefahrzeug verbundenen Zugmaschine. Üblicherweise ist eine Bremsdruckleitung des Anhängefahrzeugs über einen gelben Kupplungskopf mit dem Zugfahrzeug verbunden. Bei Betätigung der Betriebsbremse wird der Bremsdruck über den gelben Kupplungskopf zum Anhängefahrzeug übertragen und liegt in diesem Fall auch am Port 4 des Park-Löse-Ventils 20 an.

Oberhalb des mittigen Port 4 ist eine Ventilkammer 42 mit einem Steuerkolben 43 vorgesehen. Nach oben ist der Steuerkolben 43 fest mit einem Kolbenfortsatz 44 verbunden, welcher einen Querkanal 45 aufweist und von einer Druckfeder 46 in Abwärtsrichtung beaufschlagt wird. Der Kolbenfortsatz 44 ist in einem Innenzylinder 47 des unteren Teils 24 geführt und abgedichtet.

Durch Abstimmung der Geometrie und Anordnung von Steuerkolben 43, Kolbenfortsatz 44, Innenzylinder 47 und weiteren nicht erläuterten Bauteilen ist sichergestellt, dass aus einer Parkstellung heraus die Fahrstellung des Ventils 20 nur einnehmbar ist, wenn wenigstens einmal ein ausreichend hoher Druck am Port 4 anliegt, also einmal die Betriebsbremse betätigt wurde. Dadurch fährt der Steuerkolben 43 mit dem Kolbenfortsatz 44 nach oben. Der anliegende Vorratsdruck hält anschließend den Steuerkolben 43 in dieser Position. Auf diese Weise wird der Fall ausgeschlossen, dass aus Versehen das Anhängefahrzeug zuerst an den Vorratsdruck angeschlossen wird, die Federspeicherbremsen belüftet werden und das Anhängefahrzeug unkontrolliert anfängt zu rollen.

Ein zweites Ausführungsbeispiel wird anhand der Fig. 9 bis 17 erläutert. Ein Park-Löse-Ventil 48 ist hier mit einer Verriegelungsfunktion versehen. Soweit Übereinstimmung mit dem Park-Löse-Ventil 20 besteht, sind gleiche Bezugszeichen angegeben. Lediglich im oberen Teil 23 des Ventils 48 liegen Abweichungen gegenüber dem Ventil 20 vor. Innerhalb des unteren Teils 24 sind keine Änderungen vorgesehen. Auch entspricht die Außenansicht des Ventils 48 der Darstellung des Ventils 20 in Fig. 8.

Im Gegensatz zum ersten Ausführungsbeispiel ist im zweiten Ausführungsbeispiel der Anzeigeknopf 30 axial zwischen einer Verriegelungsposition (Fig. 9, 12, 13, 14, 15, 17) und einer Entriegelungsposition (Fig. 10, 11, 16) bewegbar. Mit dem Anzeigeknopf 30 ist ein Verriegelungsorgan 49 verbunden, welches im Gehäuse 22 im Bereich eines oberen Endes der Steuerstange 21 axial verschiebbar gehalten ist. Dabei stützt sich das Verriegelungsorgan 49 gegen eine Druckfeder 50 ab, welche im Gehäuse 22 und koaxial zur Steuerstange 21 gelagert ist.

Das Verriegelungsorgan 49 ist im Wesentlichen zylindrisch ausgebildet mit einem Absatz 51 am Außenumfang, so dass oberhalb des Absatzes 51 ein geringerer Außendurchmesser vorliegt als unterhalb des Absatzes 51. Bei axialer Bewegung des Anzeigeknopfes 30 verändert auch der Absatz 51 seine axiale Position.

Das Gehäuse 22, insbesondere der obere Teil 23, erstreckt sich in Axialrichtung außen und von unten ein Stück weit über das Verriegelungsorgan 49 und weist etwa im Bereich des Absatzes 51 radial gerichtete Öffnungen 52 zur Aufnahme von kugelförmigen Sperrkörpern 53 auf. Der Durchmesser der Sperrkörper 53 ist etwas größer als die Wandstärke des Gehäuses 22 in diesem Bereich. Je nach Position des Verriegelungsorgans 49 gelangt der Absatz 51 zur Anlage an den Sperrkörpern 53 und daran vorbei und drückt diese dadurch nach außen, siehe Fig. 14, 15, 17, oder lässt genügend Raum für eine Bewegung der Sperrkörper 53 in Richtung auf das Verriegelungsorgan 49, siehe Fig. 16.

Der Grundkörper 26 des Betätigungsknopfes 25 geht in dieser Ausführungsform nach unten in einen Betätigungskörper 54 über, welcher außen auf dem Gehäuse 22 axial verschiebbar ist. Auch der Betätigungskörper 54 weist einen Absatz 55 auf, welcher mit dem Sperrkörper 53 interagiert. Je nach Stellung des Betätigungskörpers 54 (mit Betätigungsknopf 25) drückt der Absatz 55 die Sperrkörper 53 in die Öffnungen 52 hinein oder erlaubt eine leichte Auswärtsbewegung der Sperrkörper 53.

Die Absätze 51, 55 und die Sperrkörper 40 sind relativ zueinander so positioniert, dass in einer unteren Entriegelungsposition des Verriegelungsorgans 49 die Sperrkörper 53 in Radialrichtung nach innen bewegt sind in die Entsperrposition gemäß Fig. 16. Genau dann ist der Betätigungskörper 54 an den Sperrkörpern 53 nach unten vorbeibewegbar in die Lösestellung der Fig. 16. Sofern sich der Anzeigeknopf 30 mit dem Verriegelungsorgan 49 in einer oberen Verriegelungsposition befindet, siehe Fig. 14, 15, 17, sind die Sperrkörper 53 radial nach außen gedrückt und blockieren eine Abwärtsbewegung des Betätigungsknopfes 25 mit Betätigungskörper 54 in die Lösestellung, da der Absatz 55 die Sperrkörper 53 nicht passieren kann.

Fig. 9 bis 13 erläutern die Übergänge von der Fahrstellung in die Lösestellung und zurück. Aus der Fahrstellung ist ein Übergang in die Lösestellung nur möglich durch eine Entriegelungsbewegung, nämlich durch Drücken des Anzeigeknopfes 30 in den Betätigungsknopf 25 hinein, siehe Fig. 10. Erst dann kann auch der Betätigungsknopf 25 abwärtsgedrückt werden, vorzugsweise zusammen mit dem Anzeigeknopf 30, siehe Fig. 11. Sobald sich der Betätigungsknopf 25 in Lösestellung gemäß Fig. 12 befindet, kann der Anzeigeknopf 30 losgelassen werden. Er wird dann durch den Druck der Druckfeder 50 nach oben ausgeschoben in die Position gemäß Fig. 12 und Fig. 16.

Die Fahrstellung kann erneut eingelegt werden durch Ziehen des Betätigungsknopfes 25 nach oben. Anschließend schließen Betätigungsknopf 25 und Anzeigeknopf 30 wieder bündig miteinander ab, siehe Fig. 15, 17, 9.

Durch die geschützte Anordnung des Anzeigeknopfes 30 innerhalb des Betätigungsknopfes 25 einerseits und die Entriegelungsfunktion des Anzeigeknopfes 30 andererseits ist ein unbeabsichtigtes Einlegen der Lösestellung ausgeschlossen.

### Bezugszeichenliste (Teil der Beschreibung)

- 20: Park-Löse-Ventil
- 21: Steuerstange
- 22: Gehäuse
- 23: oberer Teil
- 24: unterer Teil
- 25: Betätigungsknopf
- 26: Grundkörper
- 27: rote Kappe
- 28: Bolzen
- 29: Halteklammern
- 30: Anzeigeknopf
- 31: Dichtbalg
- 32: Faltenbalg
- 33: Kragen
- 34: Rastschenkel
- 35: Enden
- 36: Einschnürung
- 37: Einschnürung
- 38: topfförmiger Fortsatz
- 39: bündige Oberfläche
- 40: Ringkanal
- 41: Überströmkanal
- 42: Ventilkammer
- 43: Steuerkolben
- 44: Kolbenfortsatz
- 45: Querkanal
- 46: Druckfeder
- 47: Innenzylinder
- 48: Park-Löse-Ventil
- 49: Verriegelungsorgan
- 50: Druckfeder
- 51: Absatz
- 52: Öffnungen
- 53: Sperrkörper
- 54: Betätigungskörper
- 55: Absatz

- Port 1-1: Vorratsdruck
- Port 1-2: Vorratsbehälterdruck
- Port 2: Steuerdruck/Modulator
- Port 3: Entlüftung
- Port 4: Steuereingang

## Patentansprüche

1. Ventilbaugruppe als Park-Löse-Ventil (20, 48) für ein Anhängefahrzeug mit Federspeicherbremse, mit einer in einem Gehäuse (22) axial bewegbaren Steuerstange (21), welche an einem Ende und außerhalb des Gehäuses (22) mit einem Betätigungsknopf (25) versehen ist, **gekennzeichnet durch** einen zum Betätigungsknopf (25) benachbarten Anzeigeknopf (30), welcher
- in einer Parkstellung der Steuerstange (21) weniger aus dem Gehäuse (22) hervorragt als der Betätigungsknopf (25) und
- in einer Lösestellung weiter aus dem Gehäuse (22) hervorragt als der Betätigungsknopf (25).

2. Ventilbaugruppe nach Anspruch 1, **dadurch gekennzeichnet, dass** Anzeigeknopf (30) und Betätigungsknopf (25) in einer Fahrstellung der Steuerstange (21) gleich weit aus dem Gehäuse (22) hervorragen.

3. Ventilbaugruppe nach Anspruch 1 oder 2, **dadurch gekennzeichnet, dass** der Anzeigeknopf (30) relativ zum Gehäuse (22) unbeweglich gehalten ist, zumindest in Axialrichtung der Steuerstange (21).

4. Ventilbaugruppe nach einem der Ansprüche 1 bis 3, **dadurch gekennzeichnet, dass** der Betätigungsknopf (25) den Anzeigeknopf (30) außen umfasst, sodass der Anzeigeknopf (30) in Parkstellung der Steuerstange (21) in den Betätigungsknopf (25) eingetaucht ist und in Lösestellung aus dem Betätigungsknopf (25) herausschaut.

5. Ventilbaugruppe nach einem der Ansprüche 1 bis 4, **dadurch gekennzeichnet, dass** der Betätigungsknopf (25) mit einer anderen Farbe versehen ist als der Anzeigeknopf (30).

6. Ventilbaugruppe nach einem der Ansprüche 1 bis 5, **gekennzeichnet durch** eine Verriegelung, derart, dass eine Bewegung des Betätigungsknopfes (25) aus der Fahrstellung in die Lösestellung nur nach Lösen der Verriegelung möglich ist.

7. Ventilbaugruppe nach einem der Ansprüche 1 bis 6, **dadurch gekennzeichnet, dass** der Anzeigeknopf (30) im Gehäuse (22) bewegbar gehalten ist und zugleich Entriegelungsknopf ist, sodass ein Übergang der Steuerstange (21) von einer Fahrstellung in die Lösestellung nur möglich ist nach einer Bewegung des Anzeigeknopfes (30) in eine Entriegelungsposition.

8. Ventilbaugruppe nach Anspruch 7, **dadurch gekennzeichnet, dass** der Anzeigeknopf (30) achsparallel zur Steuerstange (21) bewegbar ist, insbesondere koaxial.

9. Ventilbaugruppe nach Anspruch 7 oder 8, **dadurch gekennzeichnet, dass** der Übergang der Steuerstange (21) von der Fahrstellung in die Lösestellung nur möglich ist nach Eindrücken des Anzeigeknopfes (30) in Richtung auf das Gehäuse (22).

10. Ventilbaugruppe nach einem der Ansprüche 7 bis 9, **dadurch gekennzeichnet, dass** in Fahrstellung der Steuerstange (21) ein Sperrkörper (53) eine Bewegung in die Lösestellung verhindert, und dass in Fahrstellung der Sperrkörper (53) durch ein insbesondere mit dem Anzeigeknopf (30) verbundenes Verriegelungsorgan (49) in einer Sperrposition gehalten wird.

11. Ventilbaugruppe nach Anspruch 10, **dadurch gekennzeichnet, dass** der Sperrkörper (53) quer zur Axialrichtung der Steuerstange (21) bewegbar ist zwischen einer Sperrposition und einer Entsperrposition, und dass die Entsperrposition nur einnehmbar ist, wenn sich der Anzeigeknopf (30) mit dem Verriegelungsorgan (49) in der Entriegelungsposition befindet.

12. Ventilbaugruppe nach Anspruch 10 oder 11, **dadurch gekennzeichnet, dass** das Verriegelungsorgan (49) mit einem Absatz (51) versehen ist, welcher in Verriegelungsposition den Sperrkörper (53) radial beaufschlagt und eine Bewegung des Sperrkörpers (53) in die Entsperrposition verhindert.

13. Ventilbaugruppe nach Anspruch 11 oder 12, **dadurch gekennzeichnet, dass** ein mit dem Betätigungsknopf (25) verbundener Betätigungskörper (54) mit einem Absatz (55) versehen ist, und dass dieser Absatz (55) nur in Entsperrposition des Sperrkörpers (53) am Sperrkörper (53) vorbeibewegbar ist.

14. Ventilbaugruppe nach einem der Ansprüche 1 bis 13, **dadurch gekennzeichnet, dass** in Fahrstellung ein Anschluss (Port 1-1) für Vorratsdruck mit einem Anschluss (Port 2) für einen Steuerdruck verbunden ist.

15. Ventilbaugruppe nach einem der Ansprüche 1 bis 14, **dadurch gekennzeichnet, dass** in Parkstellung ein Anschluss (Port 2) für einen Steuerdruck mit einem Anschluss (Port 3) für eine Entlüftung verbunden ist.

16. Ventilbaugruppe nach einem der Ansprüche 1 bis 15, **dadurch gekennzeichnet, dass** in Lösestellung ein Anschluss (Port 1-2) für Vorratsbehälterdruck mit einem Anschluss (Port 2) für einen Steuerdruck verbunden ist.

17. Pneumatische Bremsanlage für ein Anhängefahrzeug, mit einer Ventilbaugruppe nach einem der Ansprüche 1 bis 16.

18. Anhängefahrzeug mit einer pneumatischen Bremsanlage nach Anspruch 17.

## Claims

1. A valve assembly as a parking release vale (20, 48) for a trailer with spring reservoir brakes, with an axially movable control rod (21) in a housing (22), which is provided with an actuating knob (25) on one end and outside of the housing (22), **characterized by** a display knob (30) adjacent to the actuating knob (25), which
- in a park position of the control rod (21) protrudes less from the housing (22) than the actuating knob (25) and
- in a release position protrudes further from the housing (22) than the actuating knob (25).

2. The valve assembly according to claim 1, **characterized in that** in a drive position of the control rod (21) the display knob (30) and actuating knob (25) protrude equally far from the housing (22).

3. The valve assembly according to claim 1 or 2, **characterized in that** the display knob (30) is held motionless relative to the housing (22), at least in the axial direction of the control rod (21).

4. The valve assembly according to any of claims 1 to 3, **characterized in that** the actuating knob (25) encompasses the display knob (30) outside, so that the display knob (30) in park position of the control rod (21) is immersed in the actuating knob (25) and in the release position protrudes from the actuating knob (25).

5. The valve assembly according to any of claims 1 to 4, **characterized in that** the actuating knob (25) is provided with a different color than the display knob (30).

6. The valve assembly according to any of claims 1 to 5, **characterized by** a locking such that a movement of the actuating knob (25) from the drive position to the release position is only possible after release of the lock.

7. The valve assembly according to any of claims 1 to 6, **characterized in that** the display knob (30) is held moveable in the housing (22) and at the same time is an unlocking knob, so that a transition of the control rod (21) from a drive position to the release position is only possible after a movement of the display knob (30) to an unlocking position.

8. The valve assembly according to claim 7, **characterized in that** the display knob (30) is moveable axially parallel to the control rod (21), in particular coaxially.

9. The valve assembly according to claim 7 or 8, **characterized in that** the transition of the control rod (21) from the drive position to the release position is only possible after pressing the display knob (30) in the direction toward the housing (22).

10. The valve assembly according to any of claims 7 to 9, **characterized in that** in drive position of the control rod (21) a locking body (53) prevents a movement to the release position, and that in drive position the locking body (53) is held in a locking position by a locking member (49) in particular connected to the display knob (30).

11. The valve assembly according to claim 10, **characterized in that** the locking body (53) is moveable transversely to the axial direction of the control rod (21) between a locking position and an unlocking position, and **in that** the unlocking position can only be assumed when the display knob (30) is with the locking member (49) in the unlocking position.

12. The valve assembly according to claim 10 or 11, **characterized in that** the locking member (49) is provided with a shoulder (51) which in the locking position radially impacts the locking body (53) and prevents a movement of the locking body (53) to the unlocking position.

13. The valve assembly according to claim 11 or 12, **characterized in that** an actuating body (54) connected to the actuating knob (25) is provided with a shoulder (55) and that this shoulder (55) can be moved past the locking body (53) only in the unlocking position of the locking body (53).

14. The valve assembly according to any of claims 1 to 13, **characterized in that** in drive position a port (Port 1-1) for supply pressure is connected to a port (Port 2) for a control pressure.

15. The valve assembly according to any of claims 1 to 14, **characterized in that** in park position a port (Port 2) for a control pressure is connected to a port (Port 3) for a vent.

16. The valve assembly according to any of claims 1 to 15, **characterized in that** in release position a port (Port 1-2) for reservoir container pressure is connected to a port (Port 2) for a control pressure.

17. A pneumatic brake system for a trailer with a valve assembly according to any of claims 1 to 16.

18. A trailer with a pneumatic brake system according to claim 17.

## Revendications

1. Ensemble soupape sous la forme d'une soupape de desserrage de frein de stationnement (20, 48) pour un véhicule tracté avec frein à ressort, avec une tige de commande (21) mobile axialement dans un carter (22), laquelle est pourvue à une extrémité et à l'extérieur du carter (22) d'un bouton d'actionnement (25), **caractérisé par** un bouton d'affichage (30) voisin du bouton d'actionnement (25), lequel
- dans une position de stationnement de la tige de commande (21) fait moins saillie du carter (22) que le bouton d'actionnement (25) et
- dans une position de desserrage fait davantage saillie du carter (22) que le bouton d'actionnement (25).

2. Ensemble soupape selon la revendication 1, **caractérisé en ce que** le bouton d'affichage (30) et le bouton d'actionnement (25) dans une position de conduite de la tige de commande (21) font saillie aussi loin du carter (22).

3. Ensemble soupape selon la revendication 1 ou 2, **caractérisé en ce que** le bouton d'affichage (30) est retenu immobile par rapport au carter (22), au moins dans la direction axiale de la tige de commande (21).

4. Ensemble soupape selon l'une quelconque des revendications 1 à 3, **caractérisé en ce que** le bouton d'actionnement (25) entoure extérieurement le bouton d'affichage (30), de sorte que le bouton d'affichage (30) dans la position de stationnement de la tige de commande (21) est enfoncé dans le bouton d'actionnement (25) et dans la position de desserrage sort du bouton d'actionnement (25).

5. Ensemble soupape selon l'une quelconque des revendications 1 à 4, **caractérisé en ce que** le bouton d'actionnement (25) est pourvu d'une autre couleur que le bouton d'affichage (30).

6. Ensemble soupape selon l'une quelconque des revendications 1 à 5, **caractérisé par** un verrouillage, de telle sorte qu'un mouvement du bouton d'actionnement (25) hors de la position de conduite dans la position de desserrage n'est possible qu'après desserrage du verrouillage.

7. Ensemble soupape selon l'une quelconque des revendications 1 à 6, **caractérisé en ce que** le bouton d'affichage (30) est retenu mobile dans le carter (22) et est en même temps bouton de déverrouillage, de sorte qu'un passage de la tige de commande (21) d'une position de conduite dans la position de desserrage n'est possible qu'après un mouvement du bouton d'affichage (30) dans une position de déverrouillage.

8. Ensemble soupape selon la revendication 7, **caractérisé en ce que** le bouton d'affichage (30) est mobile parallèlement à l'axe de la tige de commande (21), en particulier coaxialement.

9. Ensemble soupape selon la revendication 7 ou 8, **caractérisé en ce que** le passage de la tige de commande (21) de la position de conduite dans la position de desserrage n'est possible qu'après enfoncement du bouton d'affichage (30) en direction du carter (22).

10. Ensemble soupape selon l'une quelconque des revendications 7 à 9, **caractérisé en ce que** dans la position de conduite de la tige de commande (21) un corps de blocage (53) empêche un mouvement dans la position de desserrage, et que dans la position de conduite le corps de blocage (53) est retenu dans une position de blocage par un organe de verrouillage (49) en particulier relié au bouton d'affichage (30).

11. Ensemble soupape selon la revendication 10, **caractérisé en ce que** le corps de blocage (53) est mobile transversalement à la direction axiale de la tige de commande (21) entre une position de blocage et une position de déblocage, et que la position de déblocage ne peut être occupée que lorsque le bouton d'affichage (30) avec l'organe de verrouillage (49) se trouve dans la position de déverrouillage.

12. Ensemble soupape selon la revendication 10 ou 11, **caractérisé en ce que** l'organe de verrouillage (49) est pourvu d'un talon (51), lequel dans la position de verrouillage sollicite radialement le corps de blocage (53) et empêche un mouvement du corps de blocage (53) dans la position de déblocage.

13. Ensemble soupape selon la revendication 11 ou 12, **caractérisé en ce qu'**un corps d'actionnement (54) relié au bouton d'actionnement (25) est pourvu d'un talon (55), et que ce talon (55) ne peut se déplacer devant le corps de blocage (53) que dans la position de déblocage du corps de blocage (53).

14. Ensemble soupape selon l'une quelconque des revendications 1 à 13, **caractérisé en ce que** dans la position de conduite un raccord (orifice 1-1) pour une pression de réserve est relié à un raccord (orifice 2) pour une pression de commande.

15. Ensemble soupape selon l'une quelconque des revendications 1 à 14, **caractérisé en ce que** dans la position de stationnement un raccord (orifice 2) pour une pression de commande est relié à un raccord (orifice 3) pour une ventilation.

16. Ensemble soupape selon l'une quelconque des revendications 1 à 15, **caractérisé en ce que** dans la position de desserrage un raccord (orifice 1-2) pour une pression de contenant de réserve est relié à un raccord (orifice 2) pour une pression de commande.

17. Système de freinage pneumatique pour un véhicule tracté comprenant un ensemble soupape selon l'une quelconque des revendications 1 à 16.

18. Véhicule tracté comprenant un système de freinage pneumatique selon la revendication 17.
